# EUROPÄISCHE PATENTSCHRIFT

(11) **EP 0 445 315 B1**
(45) Veröffentlichungstag und Bekanntmachung des Hinweises auf die Patenterteilung: **26.01.1994**
(21) Anmeldenummer: 90104190.5
(22) Anmeldetag: 05.03.1990
(51) Int. Cl.: H02H 6/00

(54) **Verfahren und Einrichtung zur lastadaptiven Überlast-Überwachung**
Process and device for monitoring overloads adaptive to the load
Procédé et dispositif pour la surveillance de surcharge s'adaptant à la charge

(43) Veröffentlichungstag der Anmeldung: 11.09.1991
(73) Patentinhaber: SIEMENS AKTIENGESELLSCHAFT, 80333 München (DE)
(72) Erfinder: Link, Ulrich, Dr.-Ing., W-8523 Baiersdorf (DE)

(56) Entgegenhaltungen:
- EP-A- 0 019 885
- DE-A- 2 616 048
- US-A- 3 942 074
- US-A- 4 884 162

## Beschreibung

Die Erfindung bezieht sich auf ein Verfahren und eine Einrichtung zur lastadaptiven Überlast-Überwachung.

Im Handel sind Geräte mit einer Überlastüberwachung erhältlich ("Drehzahlveränderbare Antriebe in der Praxis", Seiten 34 bis 38, Siemens, Bestell-Nr. A 19100-E319-A365). Die Überlast wird von außen dem Gerät vorgegeben und kann vom Gerät nicht beeinflußt werden. Damit das Gerät nicht beschädigt werden kann, wird jede Überlastung überwacht. Tritt eine Überlast auf, so wird diese nur für einen vorbestimmten Überlastzeitraum, beispielsweise eine Minute, zugelassen. Mit dem Auftreten der Überlast beginnt ein Überlast-Zeitintervall, beispielsweise 10 Minuten, anzulaufen. Erst nach Ablauf dieses Überlast-Zeitintervalls ist eine erneute Überlast zulässig, auch wenn die vorherige Überlast kleiner war, als die am Gerät eingestellte, maximal zugelassene Überlast. D.h., es wird nur eine Überlast pro Überlast-Zeitintervall zugelassen, unabhängig von der Ausnutzung der zulässigen Überlast.

Der Erfindung liegt nun die Aufgabe zugrunde, ein Verfahren und eine Einrichtung zur lastadaptiven Überlast-Überwachung anzugeben, wodurch eine erneute Überlast bereits zu dem Zeitpunkt zulässig ist, zu dem die Überlastfolgen abgebaut sind oder die maximal zulässige Überlast innerhalb eines Überlast-Zeitintervalls nicht ausgeschöpft ist.

Diese Aufgabe wird erfindungsgemäß gelöst durch die kennzeichnenden Merkmale des Anspruchs 1. Durch die Bildung des Belastungs-Integrals und des Überlast-Ausgleichs besteht die Möglichkeit, die Überlastreserve festzustellen und das Überlast-Zeitintervall veränderbar zu machen. Der Überlast-Ausgleich bildet den Abbau der Überlastfolgen, beispielsweise den Abbau einer Übertemperatur, nach und ist das Integral aus dem Produkt von maximal zugelassener Überlast und dem maximal zugelassenen Überlast-Tastverhältnis über der Zeit. Ein Vergleich dieses gebildeten Belastungs-Integrals mit einem zulässigen Überlast-Integral zeigt an, ob eine Überlastreserve noch vorhanden ist oder nicht. Ist keine Überlastreserve mehr vorhanden, so wird eine erneute Überlast nicht mehr zugelassen, bis die Überlastfolgen abgebaut sind. Um dies festzustellen, wird ein Überlast-Ergebnis, nämlich die Differenz zwischen dem Belastungs-Integral und dem Überlast-Ausgleich, ermittelt. Sobald das Überlast-Ergebnis Null geworden ist, sind die Überlastfolgen abgebaut und eine erneute Überlast ist zulässig.

Somit besteht durch dieses Verfahren die Möglichkeit, eine maximal zulässige Überlast eines Gerätes innerhalb eines Überlast-Zeitintervalls voll auszunutzen oder das Überlast-Zeitintervall zu verkürzen, wenn die maximal zulässige Überlast nicht ausgenutzt wird.

Bei einem vorteilhaften Verfahren wird das Belastungs-Integral aus einer Belastungsdifferenz, ermittelt aus Augenblicks-Belastung und Nenn-Belastung, über der anstehenden Zeit gebildet. Dabei kann die Belastungsdifferenz auch kleiner als die Nenn-Belastung werden. Durch diese Belastung, kleiner als eine Nenn-Belastung des Gerätes, kann eine Überlastfolge einer vorherigen Überlast schneller abgebaut werden, wodurch das überlast-Zeitintervall sich erheblich verkürzt, wenn keine weitere Überlast auftritt.

Bei einer erfindungsgemäßen Einrichtung zur Durchführung des Verfahrens ist an einem ersten rücksetzbaren Integrator eine Überlast mittels eines ersten Schalters aufschaltbar, dessen Betätigungseingang mit einem ersten Komparator verknüpft ist, ist die Überlast mittels eines ersten Vergleichers aus einer Augenblicks-Belastung und einer Nenn-Belastung ermittelt und mit einem Eingang des Komparators verbunden, ist der Ausgang des ersten rücksetzbaren Integrators einerseits mit einem negativen Eingang eines zweiten Vergleichers und mit einem positiven Eingang eines dritten Vergleichers und andererseits mit einem zweiten Komparator verknüpft, wirkt der Ausgang des zweiten Komparators auf einen zweiten Schalter ein, der eine maximal zulässige Überlast auf den Eingang eines zweiten rücksetzbaren Integrators schaltet, dessen Ausgang mit einem negativen Eingang des dritten Vergleichers verbunden ist, ist der Ausgang des zweiten Vergleichers mit einem dritten Komparator verknüpft, an dessen Ausgang ein Überlast-Signal abnehmbar ist und ist der Ausgang des dritten Vergleichers mit einer Rücksetzeinrichtung des ersten und zweiten rücksetzbaren Integrators verknüpft. Durch die Verwendung von Integratoren, Komparatoren, Vergleichern ist der Aufbau der Einrichtung einfach und kompakt.

Bei einer vorteilhaften Ausführungsform der Einrichtung steht die Überlast direkt am Eingang des ersten rücksetzbaren Integrators an. Dadurch wird infolge einer Belastung kleiner einer Nenn-Belastung das ermittelte Belastungs-Integral wieder kleiner, wodurch das Überlast-Ergebnis schneller gegen Null abnimmt. Somit reduziert sich das Überlast-Zeitintervall noch weiter.

Eine besonders vorteilhafte Ausgestaltung der Erfindung ist ein Mikro-Rechner, in dessen Programm die den Verfahrensschritten zugrundeliegenden Gleichungen implementiert sind. Wenn das Gerät eine mikroprozessorgesteuerte Regelung aufweist, so können die Gleichungen in einem das Gerät steuernde Programm implementiert werden.

Zur weiteren Erläuterung der Erfindung wird auf die Zeichnung Bezug genommen, in der ein Ausführungsbeispiel der Einrichtung zur Durchführung des erfindungsgemäßen Verfahrens zur lastadaptiven Überlast-Überwachung schematisch veranschaulicht ist.
- Figur 1: zeigt eine Einrichtung zur Durchführung des Verfahrens und in
- Figur 2: ist die Wirkungsweise der Einrichtung nach Figur 1 dargestellt.

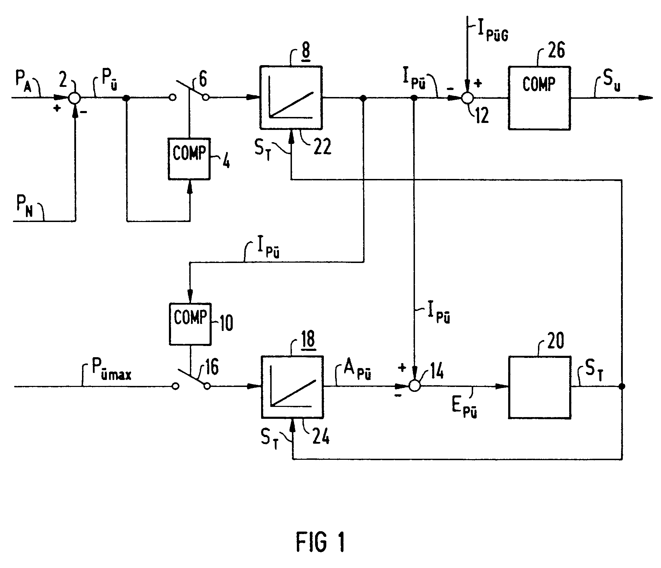

In Figur 1 ist eine Einrichtung zur Durchführung des Verfahrens zur lastadaptiven Überlast-Überwachung näher dargestellt. Eine Augenblicks-Belastung P_{A} wird mittels eines ersten Vergleichers 2 mit einer Nenn-Belastung P_{N} verglichen, wobei am Ausgang des ersten Vergleichers 2 eine Überlast P_{ü} ansteht. Diese Überlast P_{ü} steht einerseits am Eingang eines ersten Komparators 4 und andererseits an einem ersten Schalter 6 an, wobei der Ausgang des ersten Komparators 4 den ersten Schalter 6 betätigt, wodurch die Überlast P_{ü} auf einen Eingang eines ersten rücksetzbaren Integrators 8 schaltbar ist. Der Ausgang dieses Integrators 8 ist einerseits mit einem zweiten Komparator 10 und andererseits mit einem negativen Eingang eines zweiten Vergleichers 12 und mit einem positiven Eingang eines dritten Vergleichers 14 verbunden. Der zweite Komparator 10 steuert einen zweiten Schalter 16, wodurch eine maximal zulässige Überlast P_{ümax} auf einen Eingang eines zweiten rücksetzbaren Integrators 18 schaltbar ist. Der Ausgang des zweiten rücksetzbaren Integrators 18 ist mit einem negativen Eingang des dritten Vergleichers 14 verknüpft. Der Ausgang dieses Vergleichers 14 ist mit einem Schaltwerk 20 verbunden, dessen Ausgang einerseits mit einer Rücksetzeinrichtung 22 des ersten rücksetzbaren Integrators 8 und andererseits mit einer Rücksetzeinrichtung des zweiten rücksetzbaren Integrators 18 verknüpft ist. Der Ausgang des zweiten Vergleichers 12 ist mit einem dritten Komparator 20 verbunden, an dessen Ausgang ein Überlast-Signal S_{ü} ansteht, das einer nicht dargestellten Schutzeinrichtung des belasteten Gerätes zugeführt wird. Als Schaltwerk 20 ist ein negativ flankengetriggerter Baustein vorgesehen.

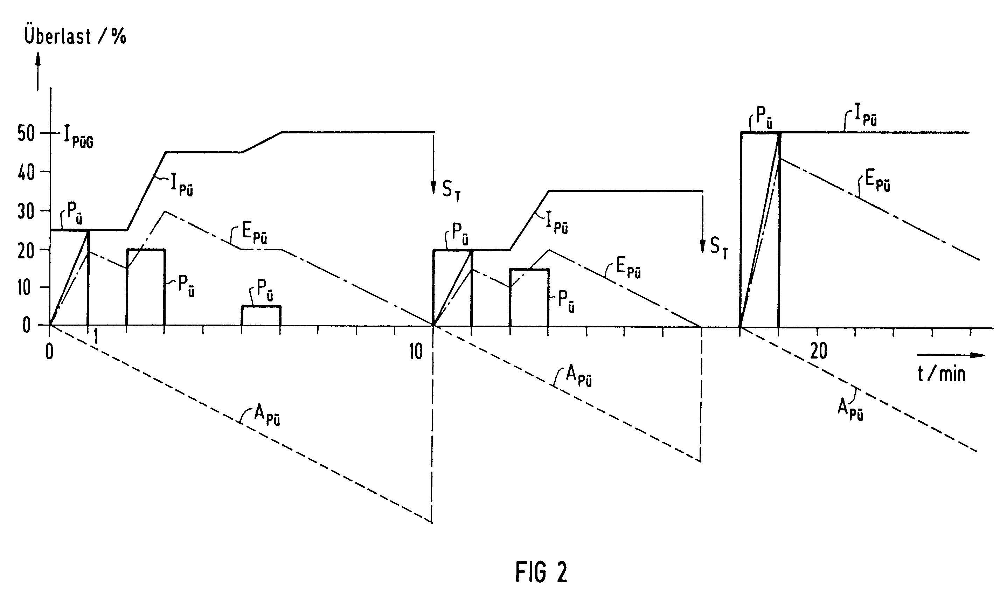

Anhand der Figur 2 wird die Funktionsweise dieser Einrichtung nach Figur 1 bzw. das Verfahren zur lastadaptiven Überlast-Überwachung näher erläutert:

Zur Erläuterung dieses Verfahrens wird vorausgesetzt, daß als Gerät ein Stromrichter vorgesehen ist, der einen Nennstrom von 100 A hat. Dieser Stromrichter ist so beschaffen, daß der Strom mit einem Tastverhältnis von 10 % während maximal einer Minute um maximal 50 % über den Nennstrom steigen darf. D.h., der Strom darf beim angegebenen Tastverhältnis maximal eine Minute 150 A betragen. Nach einer solchen einminütigen Überlast von 50 % darf der Stromrichter, um nicht überhitzt zu werden, während 9 Minuten nur mit Nennstrom belastet werden (Überlastverbot).

Zum Zeitpunkt t = 0 tritt eine 25 %ige Überlast P_{ü} für eine Minute auf. Mit Auftreten dieser Überlast P_{ü} beginnt die Integration des Überlast-Ausgleichs A_{Pü}. Das Überlast-Ergebnis E_{Pü} steigt als Differenz aus Belastungs-Integral I_{Pü} und Überlast-Ausgleich A_{Pü} langsamer als das Belastungs-Integral I_{Pü} an und erreicht am Ende der Überlast 20 % Überbelastung. Während einer Überlastpause von einer Minute sinkt das Überlast-Ergebnis E_{Pü} auf 15 % Überbelastung. Zum Zeitpunkt t = 2 Minuten erfolgt eine einminütige Überlast von 20 %, wodurch das Belastungs-Integral I_{Pü} auf 45 % Überbelastung und das Überlast-Ergebnis E_{Pü}, als Ergebnis der Differenz von Belastungs-Integral I_{Pü} und Überlast-Ausgleich A_{Pü}, auf 30 % Überbelastung ansteigt. An dieser zweiten einminütigen Überlast schließt sich wieder eine zweiminütige Überlastpause an. Während dieser Überlastpause sinkt infolge des konstanten Belastungs-Integrals I_{Pü} und des aufsteigenden Überlast-Ausgleichs A_{Pü} das Überlast-Ergebnis E_{Pü} auf 20 % Überbelastung. Durch eine an die Überlastpause sich anschließende einminütige 5 %ige Überlast steigt das Belastungs-Integral I_{Pü} auf den maximal zulässigen Überlast-Integral-Wert I_{PüG} von 50 % Überbelastung an. Mit dem Erreichen dieses zulässigen Überlast-Integrals I_{PüG} wird der Ausgang des zweiten Vergleichers 12 Null, wodurch am Ausgang des dritten Komparators 26 ein Überlast-Signal S_{ü} ansteht. Dieses Überlast-Signal S_{ü} aktiviert eine Schutzvorrichtung, die das Gerät vor weiterer Überlastung schützt. Das Überlast-Ergebnis E_{Pü} fällt nun im Zeitraum t = 6 Minuten bis t = 10 Minuten von 20 % Überbelastung auf 0 % Überbelastung ab. Mit Erreichen der 0 %igen Überbelastung sind die Überlastfolgen abgebaut, wodurch am Ausgang des Schaltwerks 20 ein Rücksetz-Signal S_{T} ansteht. Dieses Rücksetzsignal S_{T} setzt den ersten und zweiten Integrator 8 und 18 wieder auf Null, den Anfangswert, zurück, wodurch eine neue Überlast zugelassen werden kann.

Die beiden nächsten einminütigen 20 %igen und 15 %igen Überlastungen - von t = 10 Minuten bis t = 11 Minuten und von t = 12 Minuten bis t = 13 Minuten - bringen das Belastungs-Integral I_{Pü} auf einen Wert von 35 % Überbelastung. Das überlast-Ergebnis E_{Pü} erreicht bei t = 17 Minuten die 0 %-Überbelastung, wodurch mittels des generierten Rücksetz-Signals S_{T} die beiden Integratoren 8 und 18 zurückgesetzt werden. Somit kann bereits nach sieben Minuten, d.h. drei Minuten früher, eine erneute Überlast P_{ü} zugelassen werden. D.h., wenn das Belastungs-Integral I_{Pü} kleiner als das maximal zulässige Überlast-Integral I_{PüG} bleibt, verkürzt sich infolge von Überlastreserven das Überlast-Zeitintervall.

Ab dem Zeitpunkt t = 18 Minuten wird innerhalb einer Minute eine 50 %ige Überlast zugelassen. Infolge dieser Überlast steigt das Belastungs-Integral I_{Pü} auf den maximal zulässigen Wert des Überlast-Integrals I_{PüG} an. Dadurch wird das Überlast-Signal S_{ü} generiert, womit weitere Überlastungen nicht mehr zugelassen werden. Das Überlast-Ergebnis E_{Pü} erreicht die 0 %ige Überbelastung bei t = 28 Minuten. Mit Erreichen der 0 %igen Überbelastung werden die Integratoren 8 und 18 wieder auf ihre Ausgangswerte gesetzt und die Einrichtung ist wieder bereit, eine Überbelastung zu überwachen.

Anstelle einer Stromüberbelastung können beliebige andere Größen überwacht werden (Temperatur, Druck), wenn ein vorgegebener mittlerer Wert über einen bestimmten Zeitraum hinweg nicht überschritten werden darf. Statt des einfachen Überstroms kann zur Erzielung einer genaueren Nachbildung der Temperaturverhältnisse der Strom-Effektivwert als Überlastgröße verwendet werden.

Durch dieses Verfahren ist man nicht mehr an das starre vorgegebene Überlast-Zeitintervall gebunden. Außerdem können mehrere Überlastungen innerhalb eines Überlast-Zeitintervalls zugelassen werden, bis eine maximal zulässige Überlastung erreicht ist, d.h., bis die Überlastreserve innerhalb eines Überlast-Zeitintervalls abgebaut ist.

## Patentansprüche

1. Verfahren zur lastadaptiven Überlast-Überwachung eines Gerätes, **gekennzeichnet** durch folgende Verfahrensschritte:
a) gleichzeitige Bildung eines Belastungs-Integrals (I_{Pü}) aus einer während eines Zeitintervalls (t₁) anstehenden Überlast (P_{ü}) und eines Überlast-Ausgleich Integrals über der Zeit (A_{Pü}),
b) Bildung eines Überlast-Ergebnisses (E_{Pü}), indem fortlaufend das Überlast-Ausgleich Integrals (A_{Pü}) vom Belastungs-Integral (I_{Pü}) subtrahiert wird,
c) Überwachung des Belastungs-Integrals (I_{Pü}) in Bezug auf ein zulässiges Überlast-Integral (I_{PüG}),
d) Überwachung des Überlast-Ergebnisses (E_{Pü}) in Bezug auf eine positive Nullstelle,
e) Rücksetzen des Belastungs-Integrals (I_{Pü}) und des Überlast-Ausgleich Integrals (A_{Pü}), sobald das Überlast-Ergebnis (E_{Pü}) Null ist und
f) Generieren eines Überlastsignals (S_{ü}) zum Aktivieren von Schutzmaßnahmen des Gerätes, sobald das Belastungs-Integral (I_{Pü}) gleich dem zulässigen Überlast-Integral (I_{PüG}) ist.

2. Verfahren nach Anspruch 1, wobei zur Bildung des Belastungs-Integrals (I_{Pü}) eine Belastungsdifferenz, ermittelt aus Augenblicks-Belastung (P_{A}) und Nenn-Belastung (P_{N}), verwendet wird.

3. Einrichtung zur Durchführung des Verfahrens nach Anspruch 1, wobei an einem ersten rücksetzbaren Integrator (8) eine Überlast (P_{ü}) mittels eines ersten Schalters (6) aufschaltbar ist, dessen Betätigungseingang mit einem ersten Komparator (4) verknüpft ist, daß die Überlast (P_{ü}) mittels eines ersten Vergleichers (2) aus einer Augenblicks-Belastung (P_{A}) und einer Nenn-Belastung (P_{N}) ermittelt und mit einem Eingang des ersten Komparators (4) verbunden ist, daß der Ausgang des ersten rücksetzbaren Integrators (8) einerseits mit einem negativen Eingang eines zweiten Vergleichers (12) und mit einem positiven Eingang eines dritten Vergleichers (14) und andererseits mit einem zweiten Komparator (10) verknüpft ist, daß der Ausgang des zweiten Komparators (10) auf einen zweiten Schalter (16) einwirkt, der eine maximal zulässige Überlast (P_{ümax}) auf den Eingang eines zweiten rücksetzbaren Integrators (18) schaltet, dessen Ausgang mit einem negativen Eingang des dritten Vergleichers (14) verbunden ist, daß der Ausgang des zweiten Vergleichers (12), dessen positiver Eingang ein zulässiges Überlast-Integral (I_{PüG}) erhält, mit einem dritten Komparator (26) verknüpft ist, an dessen Ausgang ein Überlast-Signal (S_{ü}) abnehmbar ist und daß der Ausgang des dritten Vergleichers (14) mit einem Schaltwerk (20) verbunden ist, dessen Ausgang jeweils mit der Rücksetzeinrichtung (22, 24) des ersten und zweiten rücksetzbaren Integrators (8, 18) verknüpft ist.

4. Einrichtung nach Anspruch 3, wobei die Überlast (P_{ü}) ermittelt aus einer Augenblicks-Belastung (P_{A}) und einer Nenn-Belastung (P_{N}), direkt am Eingang des ersten rücksetzbaren Integrators (8) ansteht.

5. Einrichtung nach Anspruch 3, wobei ein Mikro-Rechner vorgesehen ist.

## Claims

1. Method for load-adaptive overload-monitoring of a device, characterised by the following method steps:
a) simultaneous formation of a load-integral (I_{Pü}) from an overload (P_{ü}), which occurs during a time interval (t₁), and an overload-compensation integral over time (A_{Pü});
b) formation of an overload-result (E_{Pü}) by continuously subtracting overload-compensation integral (A_{Pü}) from the load-integral (I_{Pü});
c) monitoring of the load-integral (I_{Pü}) relative to a permissible overload-integral (I_{PüG});
d) monitoring of the overload-result (E_{Pü}) relative to a positive zero position;
e) resetting of the load-integral (I_{Pü}) and of the overload-compensation integral (A_{Pü}) as soon as the overload-result (E_{Pü}) is zero; and
f) generation of an overload signal (S_{ü}) for the activation of protective measures of the device as soon as the load-integral (I_{Pü}) is equal to the permissible overload-integral (I_{PüG}).

2. Method according to claim 1, by which a load difference, determined from instantaneous load (P_{A}) and nominal load (P_{N}), is used for the formation of the load-integral (I_{Pü}).

3. Apparatus for carrying out the method according to claim 1, by which an overload (P_{ü}) can be applied to a first resettable integrator (8) by means of a first switch (6), the actuating input of which is linked with a first comparator (4), in that the overload (P_{ü}) is determined by means of a first comparing element (2), from an instantaneous load (P_{A}) and a nominal load (P_{N}) and is connected to an input of the first comparator (4), in that the output of the first resettable integrator (8) is linked, on the one hand, with a negative input of a second comparing element (12) and with a positive input of a third comparing element (14) and, on the other hand, with a second comparator (10), in that the output of the second comparator (10) acts on a second switch (16) which switches a maximum permissible overload (P_{ümax}) to the input of a second resettable integrator (18), the output of which is connected to a negative input of the third comparing element (14), in that the output of the second comparing element (12), the positive input of which obtains a permissible overload-integral (I_{PüG}), is linked with a third comparator (26) at the output of which an overload signal (S_{ü}) can be tapped, and in that the output of the third comparing element (14) is connected to a switch mechanism (20), the output of which is linked, in each case, with the resetting apparatus (22, 24) of the first and second resettable integrator (8, 18).

4. Apparatus according to claim 3, in which the overload (P_{ü}), determined from an instantaneous load (P_{A}) and a nominal load (P_{N}), occurs directly at the input of the first resettable integrator (8).

5. Apparatus according to claim 3, in which there is provided a microcomputer.

## Revendications

1. Procédé se contrôle, pouvant être adapté à la charge, de la surcharge d'un appareil, caractérisé par les étapes opératoires suivantes :
a) formation simultanée d'une intégrale de charge (i_{Pü}) à partir d'un surcharge (P_{ü}) appliquée pendant un intervalle de temps (t₁), et d'une intégrale de compensation de surcharge en fonction du temps (A_{Pü}),
b) formation d'un résultat de surcharge (E_{Pü}), par soustraction permanente de l'intégrale de compensation de surcharge (A_{Pü}), de l'intégrale de charge (I_{Pü}),
c) contrôle de l'intégrale de charge (I_{Pü}) par rapport à une intégrale de surcharge admissible (I_{PüG}),
d) contrôle du résultat de surcharge (E_{Pü}) par rapport avec un point d'annulation positif,
e) suppression de l'intégrale de charge (I_{Pü}) et de l'intégrale de compensation de surcharge dans le temps (A_{Pü}) dès que le résultat de surcharge (E_{Pü}) est nul, et
f) production d'un signal de surcharge (S_{ü}) pour déclencher des dispositions de protection de l'appareil, dès que l'intégrale de charge (I_{Pü}) est égale à l'intégrale de surcharge admissible (I_{PüG}).

2. Procédé suivant la revendication 1, selon lequel pour la formation de l'intégrale de charge (I_{Pü}) on utilise une différence de charge déterminée à partir de la charge instantanée (P_{A}) et de la charge nominale (P_{N}).

3. Dispositif pour la mise en oeuvre du procédé suivant la revendication 1, dans lequel une surcharge (P_{ü}) peut être appliquée à un premier intégrateur (8) pouvant être ramené à zéro, au moyen d'un premier interrupteur (6), dont l'entrée d'actionnement est reliée à un premier comparateur (4), que la surcharge (P_{ü}) est déterminée au moyen d'un premier comparateur (2) à partir d'une charge instantanée (P_{A}) et d'une charge nominale (P_{N}) et est appliquée à une entrée du premier comparateur (4), que la sortie du premier intégrateur (8) pouvant être ramené à zéro est reliée d'une part à une entrée négative d'un deuxième comparateur (12) et à une entrée positive d'un troisième comparateur (14) et d'autre part à un deuxième comparateur (10), que la sortie du second comparateur (10) agit sur un deuxième interrupteur (16), qui applique une surcharge maximale admissible (P_{ümax}) à l'entrée d'un deuxième intégrateur (18) pouvant être ramené à zéro, dont la sortie est connectée à une entrée négative du troisième comparateur (14), que la sortie du deuxième comparateur (12), dont l'entrée positive reçoit une intégrale de surcharge admissible (I_{PüG}), est reliée à un troisième comparateur (26), sur la sortie duquel peut être prélevé un signal de surcharge (S_{ü}), et que la sortie du troisième comparateur (14) est connectée à une unité de commutation (20), dont la sortie est reliée respectivement aux dispositifs de remise à zéro (22,24) des premier et second intégrateurs (8,18) pouvant être ramenés à zéro.

4. Dispositif suivant la revendication 3, dans lequel la surcharge (P_{ü}) déterminée à partir de la charge instantanée (P_{A}) et d'une charge nominale (N) est appliquée directement à l'entrée du premier intégrateur (8) pouvant être ramené à zéro.

5. Dispositif suivant la revendication 3, dans lequel il est prévu un micro-ordinateur.
